# EUROPEAN PATENT SPECIFICATION

(11) **EP 2 630 165 B1**
(45) Date of publication and mention of the grant of the patent: **05.04.2017**
(21) Application number: 11776704.6
(22) Date of filing: 24.10.2011
(51) Int. Cl.: C08F 8/14, C08G 63/08, C08L 53/00

(54) **BLOCK COPOLYMERS INCLUDING POLYLACTIDE**
BLOCKCOPOLYMERE MIT POLYLACTID
COPOLYMÈRES SÉQUENCÉS COMPRENANT DU POLYLACTIDE

(30) Priority: 22.10.2010 DE 102010042810
(43) Date of publication of application: 28.08.2013
(73) Proprietor: Fraunhofer-Gesellschaft zur Förderung der angewandten Forschung e.V., 80686 München (DE)
(72) Inventor: DORFF, Giselher, 14467 Potsdam (DE); HAHN, Mathias, 14552 Wilhelmshorst (DE); LIESKE, Antje, 14480 Potsdam (DE)
(74) Representative: Eisenführ Speiser
(86) International application number: PCT/EP2011/005352
(87) International publication number: WO 2012/052186

(56) References cited:
- US-A- 5 202 413
- US-A1- 2002 183 473
- US-A1- 2006 211 816
- US-A1- 2008 300 379

## Description

The present invention concerns primarily block copolymers including or consisting of one or more blocks of units of monomer (A), wherein monomer (A) is L- or D-lactide, and one or more blocks of units of monomer (B), wherein monomer (B) is a methylmethacrylate (MMA). The block copolymers according to the invention have a molar mass of 50,000 g/mol or more, preferably 80,000 g/mol or more, particularly preferably 100,000 g/mol or more. Preferably the proportion of the block or blocks of units of monomer (A) in a block copolymer according to the invention is 40% by weight or more (with respect to the total weight of the block copolymer).

The present invention also concerns the use of a block copolymer according to the invention for the production of a plastic article or articles which include or consist of a block copolymer according to the invention.

Further aspects of the present invention are apparent from the following description, the Examples and the accompanying claims.

Polylactides (polylactic acid or PLA) are aliphatic polyesters which contain the two enantiomers of lactic acid, D- and/or L-lactic acid as chain components. PLA has numerous properties which are advantageous for various areas of use of plastics, for example low flammability, high UV-resistance and biocompatibility. In regard to the totality of its mechanical properties PLA has parallels with polyethyleneterephthalate (PET). In addition it has advantageous barrier properties so that it is preferably used in the packaging field, in particular in the foodstuffs packaging field. The biological degradability of PLA also increases the attractiveness thereof on the part of the plastic industry, in particular on the part of consumers.

However the possible uses of PLA are limited by the low heat distortion resistance or low heat distortion resistance temperature (HDT or heat deflection/distortion temperature) and the partly unfavourable mechanical properties (for example high brittleness and low elongation at fracture (ε_{fracture})).

In the plastic industry there has long been a need for PLA-based plastics with higher heat distortion resistance than pure PLA and improved mechanical properties. Accordingly many attempts have already been made in the past to develop suitable modified PLA-based plastics. The solutions afforded hitherto however are not satisfactory.

An attempt described in the state of the art to improve the properties of PLA involves the production of PLA stereocomplexes (Polym Int 55:626-642 (2006), K Fukushima and Y Kimura, 'Stereocomplexed polylactides (Neo-PLA) as high-performance bio-based polymers: their formation, properties, and application') Admittedly K Fukushima and Y Kimura describe that the mechanical properties can be improved over pure PLA by the representation of stereocomplexes of L-PLA and D-PLA. It is known however that, with a rising molar mass of the respective enantiomer-pure polymers, the formation of the stereocomplexes is increasingly accompanied by homocrystallisation which then in turn leads to worsening of the material properties. In addition the production of such stereocomplexes on an industrial scale is limited by the fact that no bacterial cultures are available for large-scale technical and isomer-pure production of D-lactic acid, the starting product of D-PLA. Accordingly it is not to be expected at the present moment in time that the presentation of stereocomplexes of L-PLA and D-PLA will find application on a large technical scale.

A further attempt described in the state of the art to improve the mechanical properties of pure PLA involved producing blends, that is to say a mixture, of PLA and other thermoplastic materials (see for example Journal of Applied Polymer Science, Vol 108, 2139-2143 (2008), K Nakane et al. 'Blends of Poly(L-lactic acid) with Poly(omega-penta-decalactone) Synthesized by Enzyme-Catalyzed Polymerization')*.* A wide-drawn investigation into the alteration of the mechanical properties of pure PLA by mixing with other thermoplastic materials to produce blends was implemented by the PLA producer NatureWorks (NatureWorks 2/7/2007, 'Technology Focus Report: Blends of PLA with Other Thermoplastics')*.* Examples of such blends were described inter alia in WO 2009/131903 A2, whereby the heat distortion resistance temperature can be increased by 5°C by blending PLA with SMAC (styrene maleic anhydride copolymer), in comparison with pure PLA.

In accordance with WO 2009/131903 A2 the ratio of the total amount of PLA to the total amount of SMAC however is 2.3:1.0 or lower. Because of the high amount of SMAC to be used that process involves the disadvantage that such blends are relatively costly, because of the high price of SMAC, so that application on a large technical scale is not to be expected at the present time. In addition the increase in the HDT by 5°C, which is achieved with the described blends, is disproportionately low, having regard to the background of the glass transition temperature (T_{g}) of SMAC, which is higher by up to 100°C in comparison with PLA.

In addition the use of blends generally involves disadvantages or is subject to various limitations of use. Thus the successful production of blends presupposes good thorough mixing of the plastics used and the avoidance of phase separation. With increasing polarity difference between the constituents to be blended however miscibility decreases and phase separation increases whereby the possible combinations of different plastics and in particular different thermoplastics are severely limited. In addition, depending on the respective viscosity and melting temperature of the plastics used, a sufficiently high temperature has to be adopted to prevent certain areas remaining unmixed because of a possibly higher level of viscosity. Blends of PLA and further thermoplastics accordingly have to be produced at a temperature of 180°C or higher to ensure good thorough mixing. Consequently PLA can only be combined with those thermoplastics which are suitable for use at such a temperature. Added to that is the fact that PLA is partially degraded as from a temperature of 180°C so that this means that further limitations have to be accepted in the production of blends.

A further possible way of improving the mechanical properties of pure PLA is described in connection with the use of nanoparticles (see for example Journal of Applied Polymer Science, Vol 102, 4983-4988 (2006), J H Shim et al, 'Properties and Morphology of Poly(L-lactide)lClay Composites According to the Clay Modification'). The method described by J H Shim et al admittedly leads in part to slight improvements in mechanical properties. However J H Shim et al in that case base themselves on a PLA of atypically poor tensile strength. Thus, more specifically, the tensile strength is increased starting from (only) 32 MPa to 42 MPa. The procedure described by J H Shim et al is accordingly used only for improving the mechanical properties of PLA of atypically poor tensile strength (for example recycled material) or is only suitable for that purpose. In comparison with the polymers used by J H Shim et al the block copolymers according to the invention described in the context of the present text preferably have a tensile strength of 65 MPa or more.

Accordingly there is also still the need to provide PLA-based plastics which have a higher heat distortion resistance than pure PLA and improved mechanical properties, in which respect the above-mentioned disadvantages can be reduced or even avoided.

The primary object of the present invention was therefore to provide PLA-based plastics having a higher heat distortion resistance than pure PLA. Preferably such plastics should also have mechanical properties which are improved over pure PLA. It is further preferred to provide such plastics with which the disadvantages referred to hereinbefore - in connection with the approaches described in the state of the art - can be reduced or even avoided.

A further object of the present invention was that of providing plastic articles which include or consist of such a PLA-based plastic. Accordingly the invention also aims to provide uses of such plastics for the production of plastic articles.

Further underlying objects of the invention will be apparent from the present description, the Examples and in particular the accompanying claims.

The primary object of the invention is attained by a block copolymer including or consisting of:
- one or more blocks of units of monomer (A), wherein monomer (A) is selected from the group consisting of L-lactide and D-lactide, and
- one or more blocks of units of monomer (B), wherein monomer (B) is a methylmethacrylate (MMA), and
- optionally one or more blocks of units of monomer (C), wherein monomer (C) is preferably neither L-lactide nor D-lactide,
wherein the block copolymer has a molar mass of 50,000 g/mol or more, preferably 80,000 g/mol or more, particularly preferably 100,000 g/mol or more.

In the context of the present specification the molar mass is to be interpreted in each case as number average molar mass Mₙ unless otherwise specified.

Preferably the proportion of the block or blocks of units of monomer (A) in a block copolymer according to the invention (as described above) with respect to the total weight of the block copolymer is 40% by weight or more.

Accordingly the present invention primarily concerns block copolymers which are made up of two or more kinds of monomers, namely monomer (A), monomer (B) and optionally monomer (C) and possibly further kinds of monomers. Block copolymers of PLA and further polymers, in particular further thermoplastics, are already known in the state of the art (see for example J AM CHEM SOC 2002, 124, 12761-12773, A S Zalusky et al, 'Ordered Nanoporous Polymers from Polystyrene-Polylactide Block Copolymers'*,* and US No 2006/02118186 A1). However no block copolymers according to the invention (as described hereinbefore) are known from the state of the art.

Surprisingly it was found in our own investigations that a block copolymer according to the invention advantageously has better heat distortion resistance, that is to say a higher heat distortion resistance temperature (HDT) than pure PLA (with an identical number of units of monomer (A)). That is advantageous in particular insofar as block copolymers according to the invention are particularly well suited to use in packagings (for example for disposable beverage packagings) by virtue of their higher heat distortion resistance in comparison with pure PLA. Preferably a block copolymer according to the invention has a heat distortion resistance temperature which is higher by 15°C, preferably by 15 to 45°C, further preferably by 25°C, preferably by 25 to 45°C, than pure PLA (with an identical number of units of monomer (A)). Accordingly the heat distortion resistance temperature of block copolymers according to the invention is preferably in the range of 79 to 109°C, preferably in the range of 89 to 109°C.

In addition, in comparison with pure PLA (with an identical number of units of monomer (A)), block copolymers according to the invention advantageously have an identical or higher tensile strength (σₘₐₓ), preferably a tensile strength which is higher by at least 10%, an identical or higher elongation to fracture (ε_{fracture}), preferably an elongation to fracture which is higher by at least 25%, preferably by at least 50%, and/or an identical or greater modulus of elasticity (E-modulus), preferably a modulus of elasticity which is greater by at least 10%.

The aforementioned advantages apply in particular to block copolymers according to the invention which are identified as preferred in the context of the present specification.

It was found to be particularly surprising in our own investigations that, with block copolymers according to the invention with a molar mass of 50,000 g/mol or more, in comparison with pure PLA with an identical number of units of monomer (A), a significantly better heat distortion resistance and markedly improved mechanical properties are suddenly to be observed. Particularly in the case of block copolymers which are preferred according to the invention, with a molar mass of 80,000 g/mol or more, quite particularly those with a molar mass of about 100,000 g/mol, markedly improved properties (as described hereinbefore) were found in comparison with pure PLA with a respectively identical number of units of monomer (A). That was particularly surprising insofar as the glass transition temperature of pure PLA remains substantially unchanged as from a molar mass of about 50,000 g/mol, with a further increase in the molar mass. The improvement in the heat distortion resistance of pure PLA by the provision of a block copolymer according to the invention (as described hereinbefore) with a molar mass of 50,000 g/mol or more, preferably 80,000 g/mol or more, particularly preferably 100,000 g/mol or more, was therefore not to be expected starting from the state of the art.

Block copolymers which, as a departure from block copolymers according to the invention (as described hereinbefore) have a molar mass of less than 50,000 g/mol, in particular less than 45,000 g/mol, have inadequate mechanical properties for consumers and the plastic industry. It is known that PLA/PS blends which have poor mechanical properties in the low-molecular range also have poor mechanical properties in the high-molecular range. It was therefore particularly surprising that block copolymers according to the invention with a molar mass of 50,000 g/mol or more, preferably 80,000 g/mol or more, particularly preferably 100,000 g/mol or more, have improved mechanical properties (as described above).

A further advantage of block copolymers according to the invention is that PLA can be combined with a large number of different plastics, in particular different thermoplastics, to acquire different properties which are respectively desired by the man skilled in the art. A selection of plastics which are preferably to be used according to the invention (as monomer (B), monomer (C) or possibly a further monomer) is set forth hereinafter.

Particularly preferred is a block copolymer according to the invention (as described hereinbefore), wherein the proportion of the block or blocks of units of monomer (A) in the block copolymer with respect to the total weight of the block copolymer is 40 to 95% by weight, preferably 50 to 95% by weight, particularly preferably 60 to 95% by weight.

Preferably a block copolymer according to the invention is a diblock copolymer, triblock copolymer, multiblock copolymer or a star block copolymer (that is to say a multiblock copolymer, wherein two or more respective PLA strands are bound to one or both or two or more ends of the or another copolymer component).

Particularly preferred according to the invention is a block copolymer according to the invention (as described hereinbefore) wherein the block copolymer
- is a diblock copolymer and has a molar mass in the range of 50,000 to 200,000 g/mol, preferably in the range of 80,000 to 200,000 g/mol, further preferably in the range of 100,000 to 200,000 g/mol, or
- is a triblock copolymer and has a molar mass in the range of 50,000 to 250,000 g/mol, preferably in the range of 80,000 to 250,000 g/mol, further preferably in the range of 100,000 to 250,000 g/mol, or
- is a multiblock copolymer and has a molar mass in the range of 50,000 to 800,000 g/mol, preferably in the range of 50,000 to 300,000 g/mol, preferably in the range of 80,000 to 300,000 g/mol, further preferably in the range of 100,000 to 300,000 g/mol.

A block copolymer according to the invention, wherein the block copolymer is a diblock copolymer including or consisting of
- a first block (a) of units of monomer (A), and
- a second block (b) of units of monomer (B),
is particularly suitable and accordingly particularly preferred for the purposes of the present invention.

Alternative configurations of block copolymers according to the invention preferably concern triblock or multiblock copolymers, which besides a first block (a) of units of monomer (A) and a second block (b) of units of monomer (B) include either a third block (a') of units of monomer (A) or a third block (c) of units of monomer (C) and optionally one or more further blocks of units of monomer (A), (B), (C) or other monomers.

Preferably both in respect of monomer (B) and also monomer (C) and further monomers which are possibly present they are neither L-lactide nor D-lactide. Monomers (B), monomers (C) and possibly further monomers to be used, which are preferably to be employed, are referred to hereinafter.

Depending on the respective production processes, besides units of monomer (A), monomer (B) and possibly monomer (C) and further monomers, block copolymer according to the invention can include one or more further components (for example chain transfer agents or components thereof).

In a preferred configuration of the invention the individual blocks of a block copolymer according to the invention (as described hereinbefore) independently of each other respectively have a molar mass in the range of 5,000 to 200,000 g/mol, preferably in the range of 10,000 to 100,000 g/mol, particularly preferably in the range of 10,000 to 50,000 g/mol.

A block copolymer according to the invention is also preferred according to the invention, wherein the block copolymer is a multiblock copolymer and the individual blocks independently of each other respectively have a molar mass in the range of 5,000 to 100,000 g/mol.

A block copolymer according to the invention (as described hereinbefore), wherein in each case in relation to the total weight of the block copolymer
- the proportion of the block or blocks of units of monomer (A) in the block copolymer is 40 to 95% by weight, preferably 50 to 95% by weight, particularly preferably 60 to 95% by weight, and
- the proportion of the block or blocks of units of monomer (B) in the block copolymer is 5 to 60% by weight, preferably 5 to 50% by weight, particularly preferably 5 to 40% by weight,
is particularly suitable and accordingly particularly preferred according to the invention for the purposes of the present invention. Particularly preferably this involves a diblock copolymer, preferably a diblock copolymer of a configuration identified hereinbefore as particularly preferred.

As mentioned hereinbefore monomer (A) for the purposes of the present invention is selected from the group consisting of L-lactide and D-lactide. Preferably monomer (A) is L-lactide, that is to say preferably all units of monomer (A) in a block copolymer according to the invention are L-lactide.

As also mentioned hereinbefore possibly present monomer (C) and further monomers which are possibly present are preferably neither L-lactide nor D-lactide. Preferably monomer (B) and possibly monomer (C) and further monomers which are possibly present in contrast each involve building blocks for thermoplastic materials.

A block copolymer according to the invention (as described hereinbefore) is MMA Further preferably monomers (C), (D), etc which are possibly present and which are present as units in further blocks (c), (d) etc which are possibly present are also each selected independently of each other from the group consisting of styrene, acrylates, in particular MMA, olefins, in particular propylene, and derivatives thereof.

A block copolymer according to the invention (as described hereinbefore) is preferably a diblock copolymer. In that respect what has been stated hereinbefore preferably correspondingly applies to the molar mass of the block copolymer and the proportion of the block of units of monomer (A) and/or the proportion of the block of units of monomer (B).

Such block copolymers which are preferred according to the invention have particularly advantageous properties, as for example becomes clear upon comparison with blends (not according to the invention) of corresponding thermoplastics. Thus more specifically our own investigations showed that for example the tensile strength of block copolymers according to the invention, in particular block copolymers which are preferred according to the invention as described hereinbefore, in comparison with corresponding blends, is increased significantly, in part by 60% or more. A corresponding consideration applies to the elongation to fracture of block copolymers according to the invention in comparison with corresponding blends. In our own investigations that was increased in part by 100% or more in comparison with corresponding blends.

It is particularly preferred for the purposes of the present invention if the glass transition temperature (T_{g}) of a block copolymer according to the invention (as described hereinbefore) or the glass transition range is in the range of 65 to 150°C, preferably in the range of 65 to 110°C. For the purposes of the present invention the glass transition temperature is determined by means of dynamic differential calorimetry (Differential Scanning Calometry or DSC).

A further aspect of the present invention concerns the use of a block copolymer according to the invention, preferably a block copolymer identified as preferred hereinbefore, for the production of a plastic article.

Accordingly the present invention also concerns a plastic article which includes or consists of a block copolymer according to the invention, preferably a block copolymer identified as preferred hereinbefore.

The foregoing description respectively applies in corresponding fashion in each case to the features of the block copolymer according to the invention.

A plastic article according to the invention or the plastic article to be produced is preferably a shaped portion, a semimanufactured article, a fibre or a film.

Further preferably a plastic article according to the invention or the plastic article to be produced is selected from the group consisting of disposable articles, in particular drinking straws, plastic cups for hot and/or cold beverages, disposable crockery and disposable cutlery, packaging materials, components for electronic devices and components for the automobile industry.

The manufacture of block copolymers according to the invention is considered in greater detail hereinafter. Basically different procedures are appropriate for that purpose.

A configuration, which is preferred in accordance with the present invention, of a process for the production of a block copolymer according to the invention (as described hereinbefore) is represented as follows:
In a step (i) a polymer including or consisting of units of monomer (B) is provided, wherein preferably the foregoing description correspondingly applies to monomer (B). Preferably in this case the polymer is provided in the form of a macroiniator.
In a further step (ii) a polymer including or consisting of units of monomer (A) is provided, wherein preferably the foregoing description correspondingly applies to monomer (A).

The sequence of steps (i) and (ii) can be selected as desired by the man skilled in the art depending on the respective nature of the process. In accordance with the present invention however it is preferred if step (i) is performed before step (ii).

In a further step (iii) the polymer produced in step (i) and the polymer produced in step (ii) and optionally further constituents are joined together so that this provides a block copolymer including or consisting of one or more blocks of units of monomer (A) and one or more blocks of units of monomer (B), wherein the foregoing description correspondingly applies to monomers (A) and (B) and the block copolymer has a molar mass of 50,000 g/mol or more, preferably 80,000 g/mol or more, particularly preferably 100,000 g/mol or more.

Depending on the respective nature of the process steps (i), (ii) and/or (iii), in particular steps (ii) and (iii) can also be effected at the same time.

In accordance with the present invention a process is particularly preferred for the production of a block copolymer according to the invention (as described hereinbefore), which includes the steps:
(i) providing a macroinitiator including or consisting of units of monomer (B), and
(ii+iii) providing a block copolymer including or consisting of units of monomer (A) and units of monomer (B), wherein the block copolymer is produced by means of ring opening polymerisation using monomer (A) and the macroiniator of step (i),
so that this affords a block copolymer including or consisting of one or more blocks of units of monomer (A) and one or more blocks of units of monomer (B), wherein the foregoing description correspondingly applies to the monomers (A) and (B) and the block copolymer has a molar mass of 50,000 g/mol or more, preferably 80,000 g/mol or more, particularly preferably 100,000 g/mol or more.

Further aspects of processes, relevant in connection with the present invention, for the production of block copolymers according to the invention and preferred configurations thereof are set forth in the Examples hereinafter.

In accordance with the present invention particularly preferred is a block copolymer (as described hereinbefore), wherein the block copolymer can be produced by a process as described hereinbefore (and in the Examples).

A further aspect of the present invention concerns the use of a monomer (B), as described hereinbefore, preferably a monomer (B) identified as preferred hereinbefore, for the production of a block copolymer according to the invention (as described hereinbefore), characterised in that the block copolymer has a higher glass transition temperature and/or a higher heat distortion resistance temperature than pure PLA with an identical number of units of monomer (A). Further preferably the block copolymer (additionally) has an identical or higher tensile strength (σₘₐₓ), an identical or higher elongation to fracture (ε_{fracture}) and/or an identical or higher modulus of elasticity (E-modulus) than pure PLA with an identical number of units of monomer (A).

### Examples:

### Example of production (diblock copolymer based on PLA and PS) not according to the invention:

A block copolymer according to the invention is produced by polystyrene (PS), a thermoplastic material, being used as a macroinitiator in ring opening polymerisation (ROP), together with dilactide (here: L, L-dilactide).

The aliphatic hydroxy terminal group of the macroinitiator, which is required in the context of the ROP, was added by the addition of a radical transfer agent (here: mercaptoethanol) during the radical reaction to the thermoplastic (here: PS). The aliphatic hydroxy terminal group of the macroiniator can alternatively be added to the thermoplastic (here: PS) for example by the choice of an initiator with a hydroxy terminal group, anionic polymerisation or RAFT (reversible addition-fragmentation chain transfer) polymerisation.

In accordance with the present Example of production the macroinitiator is produced (in a first step (i)) as follows:

A mixture of 15 ml of toluene, 25 ml of styrene and 100 mg of a compound of formula (1) is heated for 48 h at a temperature of 92°C.

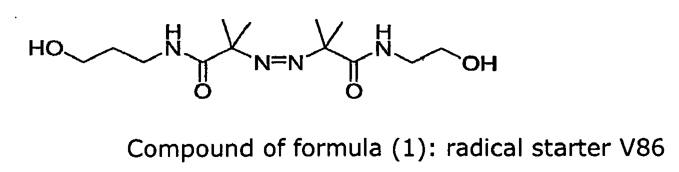

The desired molar mass can in that case be adjusted by the man skilled in the art for example by way of the addition of mercaptoethanol (as a radical transfer agent), preferably in an amount of 10 to 100 µL. In that case - starting from mercaptoethanol - a plurality of PS chains is built up. The use of a compound of formula (1) (in methanol) advantageously provides that all or at least a large part of the PS chains have a hydroxy terminal group.

The PS chains produced in that way (macroinitiator) are used in a further step ((ii)+(iii)) for the production of the diblock copolymer according to the invention together with L-lactide in the ring opening polymerisation operation.

The following reaction diagram shows the progress of ring opening polymerisation using the macroiniator produced (identified as 'ROH' in the reaction diagram):

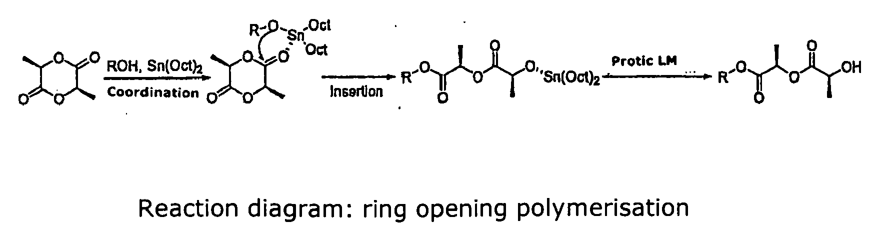

In this case tin octoate (Sn(Oct)₂) as catalyst and methanol as protic solvent were used.

The (desired) chain length of PLA was adjusted by way of the ratio of the total amount (% by weight) of dilactide to the total amount (% by weight) of macroiniator. Basically the following applies: the more hydroxy groups that are available for initiation of the PLA, the correspondingly lower is the resulting molar mass. In other words the molar mass of the resulting block copolymer is dependent on the molar mass of the macroiniator and the proportion of dilactide used.

Accordingly a diblock copolymer according to the invention including a block of units of PLLA and a block of units of PS (see the compound of formula (2)) is obtained: 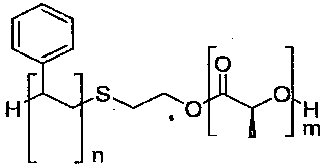 Compound of the formula (2) including PLLA

Block copolymers according to the invention can be represented in a similar procedure, using MMA as monomer (B).

## Claims

1. A block copolymer including or consisting of:
- one or more blocks of units of monomer (A), wherein monomer (A) is selected from the group consisting of L-lactide and D-lactide, and
- one or more blocks of units of monomer (B), wherein monomer (B) is a methylmethacrylate (MMA), and
wherein the block copolymer has a molar mass of 50,000 g/mol or more, preferably 80,000 g/mol or more, particularly preferably 100,000 g/mol or more.

2. A block copolymer according to claim 1 wherein the proportion of the block or blocks of units of monomer (A) in the block copolymer with respect to the total weight of the block copolymer is 40% by weight or more.

3. A block copolymer according to claim 1 or claim 2 wherein the proportion of the block or blocks of units of monomer (A) in the block copolymer with respect to the total weight of the block copolymer is 40 to 95% by weight, preferably 50 to 95% by weight, particularly preferably 60 to 95% by weight.

4. A block copolymer according to one of the preceding claims wherein the block copolymer is a diblock copolymer, triblock copolymer, multiblock copolymer or a star block copolymer.

5. A block copolymer according to one of the preceding claims wherein the block copolymer
- is a diblock copolymer and has a molar mass in the range of 50,000 to 200,000 g/mol, or
- is a triblock copolymer and has a molar mass in the range of 50,000 to 250,000 g/mol, or
- is a multiblock copolymer and has a molar mass in the range of 50,000 to 800,000 g/mol, preferably in the range of 50,000 to 300,000 g/mol.

6. A block copolymer according to one of the preceding claims wherein the block copolymer is a diblock copolymer including or consisting of
- a first block (a) of units of monomer (A), and
- a second block (b) of units of monomer (B).

7. A block copolymer according to one of the preceding claims wherein the individual blocks independently of each other respectively have a molar mass in the range of 5,000 to 200,000 g/mol, preferably in the range of 10,000 to 100,000 g/mol, particularly preferably in the range of 10,000 to 50,000 g/mol.

8. A block copolymer according to one of the preceding claims wherein the block copolymer is a multiblock copolymer and the individual blocks independently of each other respectively have a molar mass in the range of 5,000 to 100,000 g/mol.

9. A block copolymer according to one of the preceding claims wherein in each case in relation to the total weight of the block copolymer
- the proportion of the block or blocks of units of monomer (A) in the block copolymer is 40 to 95% by weight, preferably 50 to 95% by weight, particularly preferably 60 to 95% by weight, and
- the proportion of the block or blocks of units of monomer (B) in the block copolymer is 5 to 60% by weight, preferably 5 to 50% by weight, particularly preferably 5 to 40% by weight.

10. A block copolymer according to one of the preceding claims wherein monomer (A) is L-lactide.

11. A block copolymer according to one of the preceding claims wherein the block copolymer has a glass transition temperature in the range of 65 to 150°C, preferably in the range of 65 to 110°C.

12. Use of a block copolymer according to one of the preceding claims for the production of a plastic article.

13. A plastic article including or consisting of a block copolymer according to one of claims 1 to 12.

14. Use according to claim 12 wherein the plastic article is a shaped portion, a semimanufactured article, a fibre or a film and is preferably selected from the group consisting of disposable articles, in particular drinking straws, plastic cups for hot and/or cold beverages, disposable crockery and disposable cutlery, packaging materials, components for electronic devices and components for the automobile industry.

15. Plastic article according to claim 13 wherein the plastic article is a shaped portion, a semimanufactured article, a fibre or a film and is preferably selected from the group consisting of disposable articles, in particular drinking straws, plastic cups for hot and/or cold beverages, disposable crockery and disposable cutlery, packaging materials, components for electronic devices and components for the automobile industry.

## Patentansprüche

1. Blockcopolymer umfassend oder bestehend aus:
- einem oder mehr Block bzw. Blöcken von Einheiten von Monomer (A), wobei Monomer (A) ausgewählt ist aus der Gruppe bestehend aus L-Lactid und D-Lactid, und
- einem oder mehr Block bzw. Blöcken von Einheiten von Monomer (B), wobei Monomer (B) ein Methylmethacrylat (MMA) ist, und
wobei das Blockcopolymer eine molare Masse von 50.000 g/mol oder mehr, vorzugsweise 80.000 g/mol oder mehr, besonders bevorzugt 100.000 g/mol oder mehr, hat.

2. Blockcopolymer nach Anspruch 1, wobei der Anteil des Blocks oder der Blöcke von Einheiten von Monomer (A) im Blockcopolymer in Bezug auf das Gesamtgewicht des Blockcopolymers 40 Gew.-% oder mehr beträgt.

3. Blockcopolymer nach Anspruch 1 oder Anspruch 2, wobei der Anteil des Blocks oder der Blöcke von Einheiten von Monomer (A) im Blockcopolymer in Bezug auf das Gesamtgewicht des Blockcopolymers 40 bis 95 Gew.-%, vorzugsweise 50 bis 95 Gew.-%, besonders bevorzugt 60 bis 95 Gew.-%, beträgt.

4. Blockcopolymer nach einem der vorangehenden Ansprüche, wobei das Blockcopolymer ein Diblockcopolymer, Triblockcopolymer, Multiblockcopolymer oder ein Sternblockcopolymer ist.

5. Blockcopolymer nach einem der vorangehenden Ansprüche, wobei das Blockcopolymer
- ein Diblockcopolymer ist und eine molare Masse im Bereich von 50.000 bis 200.000 g/mol hat, oder
- ein Triblockcopolymer ist und eine molare Masse im Bereich von 50.000 bis 250.000 g/mol hat, oder
- ein Multiblockcopolymer ist und eine molare Masse im Bereich von 50.000 bis 800.000 g/mol, bevorzugt im Bereich von 50.000 bis 300.000 g/mol, hat.

6. Blockcopolymer nach einem der vorangehenden Ansprüche, wobei das Blockcopolymer ein Diblockcopolymer umfassend oder bestehend aus
- einem ersten Block (a) von Einheiten von Monomer (A), und
- einem zweiten Block (b) von Einheiten von Monomer (B)
ist.

7. Blockcopolymer nach einem der vorangehenden Ansprüche, wobei die einzelnen Blöcke unabhängig voneinander jeweils eine molare Masse im Bereich von 5.000 bis 200.000 g/mol, vorzugsweise im Bereich von 10.000 bis 100.000 g/mol, besonders bevorzugt im Bereich von 10.000 bis 50.000 g/mol, haben.

8. Blockcopolymer nach einem der vorangehenden Ansprüche, wobei das Blockcopolymer ein Multiblockcopolymer ist und die einzelnen Blöcke unabhängig voneinander jeweils eine molare Masse im Bereich von 5.000 bis 100.000 g/mol haben.

9. Blockcopolymer nach einem der vorangehenden Ansprüche, wobei in jedem Fall im Bezug auf das Gesamtgewicht des Blockcopolymers
- der Anteil des Blocks oder der Blöcke von Einheiten von Monomer (A) im Blockcopolymer 40 bis 95 Gew.-%, vorzugsweise 50 bis 95 Gew.-%, besonders bevorzugt 60 bis 95 Gew.-%, beträgt und
- der Anteil des Blocks oder der Blöcke von Einheiten von Monomer (B) im Blockcopolymer 5 bis 60 Gew.-%, vorzugsweise 5 bis 50 Gew.-%, besonders bevorzugt 5 bis 40 Gew.-%, beträgt.

10. Blockcopolymer nach einem der vorangehenden Ansprüche, wobei das Monomer (A) L-Lactid ist.

11. Blockcopolymer nach einem der vorangehenden Ansprüche, wobei das Blockcopolymer eine Glasübergangstemperatur im Bereich von 65 bis 150 °C, vorzugsweise im Bereich von 65 bis 110 °C, hat.

12. Verwendung eines Blockcopolymers nach einem der vorangehenden Ansprüche für die Herstellung eines Plastikartikels.

13. Plastikartikel umfassend oder bestehend aus einem Blockcopolymer nach einem der Ansprüche 1 bis 12.

14. Verwendung nach Anspruch 12, wobei der Plastikartikel ein geformtes Teil, ein Halbfertigartikel, eine Faser oder ein Film ist und vorzugsweise ausgewählt ist aus der Gruppe bestehend aus Wegwerfartikeln, insbesondere Strohhalme, Plastikbechern für heiße und/oder kalte Getränke, Wegwerfgeschirr und Wegwerfbesteck, Verpackungsmaterialien, Teile für elektronische Geräte und Teile für die Automobilindustrie.

15. Plastikartikel nach Anspruch 13, wobei der Plastikartikel ein geformtes Teil, ein Halbfertigartikel, eine Faser oder ein Film ist und vorzugsweise ausgewählt ist aus der Gruppe bestehend aus Wegwerfartikeln, insbesondere Strohhalme, Plastikbechern für heiße und/oder kalte Getränke, Wegwerfgeschirr und Wegwerfbesteck, Verpackungsmaterialien, Teile für elektronische Geräte und Teile für die Automobilindustrie.

## Revendications

1. Copolymère bloc comprenant ou consistant en:
- un ou plusieurs bloc(s) d'unités de monomère (A), dans lequel le monomère (A) est choisi dans le groupe consistant en L-lactide et D-lactide, et
- un ou plusieurs bloc(s) d'unités de monomère (B), dans lequel le monomère (B) est un méthacrylate de méthyle (MMA), et
dans lequel le copolymère bloc présente une masse molaire de 50.000 g/mole ou plus, de préférence de 80.000 g/mole ou plus, de manière particulièrement préférée de 100.000 g/mole ou plus.

2. Copolymère bloc selon la revendication 1, dans lequel la proportion du bloc ou des blocs d'unités de monomère (A) dans le copolymère bloc par rapport au poids total du copolymère bloc est de 40 % en poids ou plus.

3. Copolymère bloc selon la revendication 1 ou la revendication 2, dans lequel la proportion du bloc ou des blocs d'unités de monomère (A) dans le copolymère bloc par rapport au poids total du copolymère bloc est comprise entre 40 et 95 % en poids, de préférence entre 50 et 95 % en poids, de manière particulièrement préférée entre 60 et 95 % en poids.

4. Copolymère bloc selon l'une quelconque des revendications précédentes, dans lequel le copolymère bloc est un copolymère dibloc, un copolymère tribloc, un copolymère multibloc ou un copolymère bloc en étoile.

5. Copolymère bloc selon l'une quelconque des revendications précédentes, dans lequel le copolymère bloc
- est un copolymère dibloc et présente une masse molaire se situant dans la plage allant de 50.000 à 200.000 g/mole ou
- est un copolymère tribloc et présente une masse molaire se situant dans la plage allant de 50.000 à 250.000 g/mole ou
- est un copolymère multibloc et présente une masse molaire se situant dans la plage allant de 50.000 à 800.000 g/mole, de préférence dans la plage allant de 50.000 à 300.000 g/mole.

6. Copolymère bloc selon l'une quelconque des revendications précédentes, dans lequel le copolymère bloc est un copolymère dibloc comprenant ou consistant en
- un premier bloc (a) d'unités de monomère (A) et
- un deuxième bloc (b) d'unités du monomère (B).

7. Copolymère bloc selon l'une quelconque des revendications précédentes, dans lequel les blocs individuels indépendamment les uns des autres présentent chacun une masse molaire se situant dans la plage allant de 5.000 à 200.000 g/mole, de préférence dans la plage allant de 10.000 à 100.000 g/mole, de manière particulièrement préférée dans la plage allant de 10.000 à 50.000 g/mole.

8. Copolymère bloc selon l'une quelconque des revendications précédentes, dans lequel le copolymère bloc est un copolymère multibloc et les blocs individuels indépendamment les uns des autres présentent chacun une masse molaire se situant dans la plage allant de 5.000 à 100.000 g/mole.

9. Copolymère bloc selon l'une quelconque des revendications précédentes, dans lequel dans chaque cas par rapport au poids total du copolymère bloc
- la proportion du bloc ou des blocs d'unités de monomère (A) dans le copolymère bloc est comprise entre 40 et 95 % en poids, de préférence entre 50 et 95 % en poids, de manière particulièrement préférée entre 60 et 95 % en poids, et
- la proportion du bloc ou des blocs d'unités de monomère (B) dans le copolymère bloc est comprise entre 5 et 60 % en poids, de préférence entre 5 et 50 % en poids, de manière particulièrement préférée entre 5 et 40 % en poids.

10. Copolymère bloc selon l'une quelconque des revendications précédentes, dans lequel le monomère (A) est le L-lactide.

11. Copolymère bloc selon l'une quelconque des revendications précédentes, dans lequel le copolymère bloc présente une température de transition vitreuse se situant dans la plage allant de 65 à 150 °C, de préférence dans la plage allant de 65 à 110 °C.

12. Utilisation d'un copolymère bloc selon l'une quelconque des revendications précédentes, pour la fabrication d'un article en matière plastique.

13. Article en matière plastique comprenant ou consistant en un copolymère bloc selon l'une quelconque des revendications 1 à 12.

14. Utilisation selon la revendication 12, dans laquelle l'article en matière plastique est une pièce moulée, un article semi-fini, une fibre ou un film et est de préférence choisi dans le groupe constitué par les produits à jeter, en particulier les pailles à boire, les gobelets en matière plastique pour des boissons chaudes et/ou froides, la vaisselle de table jetable et les couverts de table jetables, les matériaux d'emballage, les composants pour des appareils électroniques et les composants pour l'industrie automobile.

15. Article en matière plastique selon la revendication 13, dans lequel ledit article en matière plastique est une pièce moulée, un article semi-fini, une fibre ou un film et est de préférence choisi dans le groupe constitué par les produits à jeter, en particulier les pailles à boire, les gobelets en matière plastique pour des boissons chaudes et/ou froides, la vaisselle de table jetable et les couverts de table jetables, les matériaux d'emballage, les composants pour des appareils électroniques et les composants pour l'industrie automobile.
